# EUROPÄISCHE PATENTSCHRIFT

(11) **EP 3 084 386 B1**
(45) Veröffentlichungstag und Bekanntmachung des Hinweises auf die Patenterteilung: **24.10.2018**
(21) Anmeldenummer: 14835472.3
(22) Anmeldetag: 16.12.2014
(51) Int. Cl.: G01B 5/255, G01M 17/007

(54) **VERFAHREN UND VORRICHTUNG ZUR EINSTELLUNG DER PARAMETER DER FAHRWERKGEOMETRIE DER RÄDER EINES FAHRZEUGS**
METHOD AND DEVICE FOR ADJUSTING THE PARAMETERS OF THE CHASSIS GEOMETRY OF THE WHEELS OF A VEHICLE
PROCÉDÉ ET DISPOSITIF POUR LE RÉGLAGE DES PARAMÈTRES DE LA GÉOMÉTRIE DE CHÂSSIS DES ROUES D'UN VÉHICULE

(30) Priorität: 19.12.2013 DE 102013114579
(43) Veröffentlichungstag der Anmeldung: 26.10.2016
(73) Patentinhaber: Dürr Assembly Products GmbH, 66346 Püttlingen (DE)
(72) Erfinder: HERRMANN, Armin, 66292 Riegelsberg (DE); GRUB, Joel, F-57930 Mittersheim (FR); KURT, Ismail, 66333 Völklingen (DE); HEIDUCZEK, Gerhard, 66292 Riegelsberg (DE)
(74) Vertreter: Patentanwaltskanzlei Vièl & Wieske PartGmbB
(86) Internationale Anmeldenummer: PCT/DE2014/100450
(87) Internationale Veröffentlichungsnummer: WO 2015/090281

(56) Entgegenhaltungen:
- EP-A1- 1 505 363
- EP-A2- 1 760 446
- DE-A1-102009 013 157
- JP-A- H04 313 012
- US-A1- 2003 159 298

## Beschreibung

Die vorliegende Erfindung betrifft ein Verfahren und eine Vorrichtung zur Einstellung der Parameter der Fahrwerkgeometrie der Räder eines Fahrzeugs nach dem Oberbegriff des Anspruchs 1 und des Anspruchs 6.

Eine weit verbreitete Vorgehensweise zur Fahrwerkgeometrieeinstellung an Pkw-Hinterachsen besteht darin, durch gezieltes Verdrehen spezieller Exzenter-Einstellschrauben die geforderten Spur- u. Sturz-Sollwerte einzustellen. Die Exzenter-Bewegungen werden durch die Radführungen (Spur, Sturz, Federlenker) an den Radträger weitergeleitet, die Messung der einzustellenden Werte erfolgt beispielsweise an den Bremsscheiben. Diese Drehbewegungen an den Exzenter-Schrauben können durch Servo-Antriebe oder durch Werkzeuge aus der Schraubtechnik erzeugt werden.

Bei dieser Vorgehensweise ist es erforderlich, spezielle Einstellwerkzeuge mit Zustelleinrichtungen auf die Einstellschraube vorzusehen. Wenn die Einstellschraube konstruktionsbedingt schlecht zugänglich ist, ist es erforderlich, Sonderwerkzeuge (Flachabtriebe, Winkeltriebe) vorzusehen zur Durchführung der Einstellarbeiten. Um die Einstellarbeiten in der Produktionslinie mit kurzen Taktzeiten vornehmen zu können, müssen die Einstellwerkzeuge automatisch die Position der Einstellschraube finden. Dadurch ist es weiterhin erforderlich, zusätzliche Einrichtungen zur Feinpositionierung der Werkzeuge zur Schraube vorzusehen.

Fahrzeugseitig ist es erforderlich, die Einstellschrauben als Sonder-Schrauben auszugestalten. Dies ist mit entsprechenden Kosten verbunden. Der Fertigungsprozess der Kulissenführungen an den Hinterachsträgern erweist sich in konstruktiver Hinsicht als vergleichsweise aufwendig. Außerdem ist ein Verschleiß (Abrieb) zwischen der Exzenter-Schraube und dem Hinterachsträger festzustellen. Dies bedingt eine nur begrenzte Anzahl von Einstellversuchen, abhängig von Materialpaarung Achskörper -Schraube.

Bei der Durchführung der Einstellarbeiten kann die Achse beispielsweise durch Greifvorrichtungen gegriffen werden, die aus dem Europäischen Patent EP 1 503 363 B1 bekannt sind. Aus dieser Patentschrift ist es bekannt, die Radflansche einer Achse stützend zu lagern mittels eines Spannfuttersystems. Das Spannfuttersystem greift die Radflansche der Achse im Bereich des Außenumfangs der Gegenlagerscheiben für die Bremsscheiben und die Räder. Das Spannfuttersystem ist so ausgestaltet, dass es den Bewegungen hinsichtlich einer Änderung der Orientierung der Radebene der Achse folgt.

Demgegenüber ist es die Aufgabe der vorliegenden Erfindung, die Einstellarbeiten der Parameter der Fahrwerkgeometrie zu vereinfachen.

Diese Aufgabe wird nach der vorliegenden Erfindung gelöst durch ein im Anspruch 1 beanspruchtes Verfahren zur Einstellung der Parameter der Fahrwerkgeometrie der Räder eines Fahrzeugs. Dabei wird zumindest eine Achse des Fahrzeugs gegriffen durch jeweils eine Greifvorrichtung im Bereich der Radflansche der jeweiligen Achse. Nach der vorliegenden Erfindung werden die Greifvorrichtungen über ansteuerbare Antriebsmittel derart bewegt, dass über die Ausrichtung der Greifvorrichtungen die Parameter der Fahrwerkgeometrie der Räder eingestellt werden. Die Greifvorrichtungen der Achse sind insoweit bekannt, als mit diesen die Achse gegriffen wird.

Dieses Greifen im Sinne der vorliegenden Erfindung betrifft dabei sowohl eine Ausgestaltung, bei der entsprechende Teile der Fahrzeugachse beispielsweise mittels eines Spannfutters gegriffen werden.

Dieses Greifen im Sinne der vorliegenden Erfindung betrifft dabei auch eine Ausgestaltung, bei der ein Befestigungselement der Greifvorrichtung mittels weiterer Befestigungsmittel an einem entsprechenden Gegenelement der Achse befestigt wird. Diese Befestigungsmittel können beispielsweise Schrauben sein. Damit kann beispielsweise ein Befestigungselement der Greifvorrichtung durch eine entsprechende Scheibe gebildet sein, die für die Durchführung der Einstellarbeiten mit der Gegenlagerscheibe für die Bremsscheiben und die Räder verschraubt wird. Entsprechendes gilt nicht nur im Zusammenhang mit den Verfahrensansprüchen sondern auch im Zusammenhang mit den Vorrichtungsansprüchen.

Das Greifen mittels des Spannfutters hat einen Vorteil hinsichtlich der Taktzeiten, weil die Befestigung und das Lösen der Greifvorrichtungen dabei einfacher ist und schneller geht.

Bei den bekannten Greifvorrichtungen folgen diese den Bewegungen des jeweils gegriffenen Teils der Achse bei der Durchführung der Einstellarbeiten. Diese Bewegungen kommen daher, dass die bekannten Einstellschrauben bei der Durchführung der Einstellarbeiten entsprechend bewegt werden.

Bei der Lösung nach der vorliegenden Erfindung sind die Greifvorrichtungen jeweils mit ansteuerbaren Antriebsmitteln verbunden. Durch diese Antriebsmittel lassen sich die Greifvorrichtungen entsprechend bewegen. Dazu können diese Greifvorrichtungen über die Antriebsmittel in der Radebene des jeweiligen Rades drehbar sein sowohl um eine Achse zur Einstellung des Spurwinkels als auch um eine Achse zur Einstellung des Sturzwinkels.

Dazu wird zu jeder der Greifvorrichtungen eine Bezugsebene definiert. Die ansteuerbaren Antriebsmittel werden dann so angesteuert und damit so eingestellt, dass sich eine Lage (Neigung) der Radebene gegenüber der Bezugsebene ergibt, die dem Sollwert des Spursowie auch des Sturzwinkels entspricht. Dabei ist ersichtlich, dass das Rad nicht an der Achse montiert sein muss. Die Greifvorrichtung greift so an der Achse an, dass dieses Greifen und die Einstellung der gegriffenen Teile der Achse über die Ausrichtung der Greifvorrichtung die Radebene eines später montierten Rades definiert.

Während beim bekannten Stand der Technik die Greifvorrichtungen so ausgestaltet waren, dass diese den Änderungen der Radebene bei der Durchführung der Einstellarbeiten folgen, ist die Vorgehensweise bei der vorliegenden Erfindung derart, dass bei gelösten Feststellmitteln für die Einstellung der Parameter der Fahrwerkgeometrie die Ausrichtung der Radebenen durch die Greifvorrichtungen erfolgt.

Die Feststellmittel bei der vorliegenden Erfindung können beispielsweise Schrauben sein, die in einem Langloch geführt sind. Bei gelösten Feststellmitteln ist dann eine Beweglichkeit entsprechend dem Langloch gegeben. Dadurch ergibt sich auch fahrzeugseitig eine einfachere Konstruktion zur Durchführung der erforderlichen Einstellarbeiten gegenüber den bisher bekannten Einstellschrauben.

Ein weiterer Vorteil besteht darin, dass die Einstellung der Spur- und Sturzwinkel zeitgleich erfolgen kann. Dadurch wird wiederum Zykluszeit gespart.

Zeitgleich bedeutet dabei entweder, dass die jeweiligen Winkel in einem Arbeitsschritt eingestellt werden.

Zeitgleich kann aber auch so definiert sein, dass die beiden Winkel unmittelbar nacheinander separat eingestellt werden.

Wenn einer der jeweiligen Winkel (Spur- oder Sturzwinkel) eingestellt wird, erweist es sich als vorteilhaft, wenn die ansteuerbaren Antriebsmittel des anderen Winkels (Sturz- oder Spurwinkel) kräftefrei geschaltet sind. Dies bedeutet, dass die Einheit insgesamt dem jeweils einzustellenden Winkel in der jeweiligen Lage folgen kann, ohne dass durch die zugehörigen ansteuerbaren Antriebsmittel des anderen Winkels Kräfte eingeleitet werden. Vorteilhaft lassen sich damit Verspannungen der Achse beim Einstellvorgang vermeiden, die sich andernfalls durch die Wechselwirkung zwischen Spur- und Sturzwinkel ergeben würden. Das ansteuerbare Antriebsmittel kann kraftfrei geschaltet werden, indem dieses beispielsweise über eine pneumatische Bremse (Kupplung) angekoppelt ist. Durch die Stellung der pneumatischen Bremse (Kupplung) wird definiert, ob über das jeweilige ansteuerbare Antriebselement Kräfte eingeleitet werden können oder ob das jeweilige ansteuerbare Antriebsmittel kräftefrei, d.h. entkoppelt ist.

Anspruch 2 betrifft eine Ausgestaltung des Verfahrens, bei der in einem ersten Schritt die Achse in den Greifvorrichtungen positioniert wird bei nicht angesteuerten Antriebsmitteln. In einem weiteren Schritt werden die Feststellmittel der Achse für die Parameter der Fahrwerkgeometrie aus deren arretierter Stellung gelöst. In einem dazu nachfolgenden Schritt werden über die ansteuerbaren Antriebsmittel die Greifvorrichtungen entsprechend dem Sollwert der Parameter der Fahrwerkgeometrie eingestellt und in dieser Position arretiert. In einem dazu nachfolgenden Schritt werden die Feststellmittel der Achse für die Parameter der Fahrwerkgeometrie wieder in die arretierte Stellung gebracht. In einem dazu nachfolgenden Schritt werden die Greifvorrichtungen wieder gelöst.

Sofern die Antriebsmittel nicht angesteuert sind, bedeutet dies, dass die Greifvorrichtungen frei beweglich sind und somit beim "Anlegen" der Greifvorrichtungen an die Achse der momentanen Einstellung der jeweiligen Radebene folgen können. Dadurch wird es möglich, die Achse durch die Greifvorrichtungen so aufzunehmen, dass bei dem Anlegen der Greifvorrichtungen an die Achse noch keine Kräfte von den Greifvorrichtungen auf die Achse übertragen werden. Soweit dies für die Einstellarbeiten notwendig ist, kann die Achse noch mit einer Kraft beaufschlagt werden. Damit kann beispielsweise für die Durchführung der Einstellarbeiten eine bestimmte Gewichtskraft simuliert werden, die von der Achse aufgenommen werden muss. Diese freie Beweglichkeit kann beispielsweise durch eine Ausgestaltung erreicht werden, bei der die im Zusammenhang mit Anspruch 1 beschriebenen Bremsen (Kupplungen) für die ansteuerbaren Antriebsmittel gelöst sind.

Durch das Lösen der Feststellmittel wird die nachfolgende Einstellung der Parameter der Fahrwerkgeometrie durch die Ansteuerung der ansteuerbaren Antriebsmittel der Greifvorrichtungen (und damit durch die entsprechenden Drehbewegungen der Greifvorrichtungen) ermöglicht.

Gegebenenfalls ist es sinnvoll, bereits vor dem Lösen der Feststellmittel aus der arretierten Stellung die ansteuerbaren Antriebsmittel der Greifvorrichtungen insoweit anzusteuern, dass diese in der jeweiligen Stellung verbleiben. Ohne eine entsprechende Ansteuerung wären die Greifvorrichtungen noch frei beweglich, so dass diese sich entsprechend den auftretenden Gewichtskräften bei einem Lösen der Feststellmittel aus der arretierten Stellung verstellen würden.

Nachdem die Radebenen entsprechend den Sollwerten eingestellt sind durch die Ausrichtung der Greifvorrichtungen mittels der ansteuerbaren Antriebsmittel, werden diese in den jeweiligen Stellungen arretiert. Dann werden die Feststellmittel wieder in die arretierte Stellung gebracht. Dies kann beispielsweise erfolgen, indem die Feststellmittel als Feststellschrauben ausgeführt sind, die mit einem definierten Drehmoment angezogen werden. Um die Feststellschrauben gegen ein unbeabsichtigtes Lösen zu sichern, können diese Feststellschrauben noch mit einer Kontermutter gesichert werden. Die Parameter sind dann fertig eingestellt und die Greifvorrichtungen können wieder gelöst werden.

Anspruch 3 betrifft eine Ausgestaltung des Verfahrens bei einer an ein Fahrzeug montierten Achse. Dabei wird das Gewicht des Fahrzeugs über Lasttragelemente abgetragen.

Dies erweist sich insofern als vorteilhaft, weil bei der vorliegenden Erfindung zwischenzeitlich die Feststellmittel für die Einstellung der Parameter der Fahrwerkgeometrie gelöst werden müssen. Sofern also bei einer an ein Fahrzeug montierten Achse das Gewicht des Fahrzeugs nicht anderweitig abgetragen wird, müsste dieses Gewicht durch die ansteuerbaren Antriebsmittel entsprechend aufgenommen und mitbewegt werden.

Bei der Ausgestaltung nach Anspruch 4 sind die Antriebsmittel der Greifvorrichtungen derart beweglich, dass diese den Einstellbewegungen bei der Ausrichtung der Greifvorrichtungen folgen.

Anspruch 4 bedeutet, dass die ansteuerbaren Antriebsmittel so gelagert sind, dass diese zwar aktiv die Einstellung der jeweiligen Radebene bewirken, dabei aber gleichzeitig so gelagert sind, dass diese den dabei auftretenden Lageänderungen folgen können.

Die Einstellung des Sturzwinkels des Rades kann erfolgen, indem die Greifvorrichtung über einen Servoantrieb um eine erste Achse drehbar ist, die in der horizontalen Ebene liegt. Die Einstellung des Spurwinkels des Rades kann erfolgen, indem die Greifvorrichtung um eine Achse drehbar ist, die zumindest im Wesentlichen vertikal verläuft. Allerdings wird diese Achse durch die Einstellung eines "Sturzwinkels ungleich Null" aus der vertikalen Orientierung herausgedreht.

Bei der Ausgestaltung nach Anspruch 4 sind die ansteuerbaren Antriebsmittel so gelagert, dass sie diesen Bewegungen folgen können, dabei aber dennoch die entsprechenden Kräfte zur Einstellung auf die Greifvorrichtung aufbringen können.

Soweit - bedingt durch die Achsgeometrie - der Drehpunkt zur Einstellung der Radebene nicht im Zentrum der Ebene der Greifvorrichtung liegt, mit der diese die Achse greift, ist es weiterhin erforderlich, dass die ansteuerbaren Antriebsmittel in Fahrzeuglängsrichtung sowie in Fahrzeugquerrichtung verschiebbar sind sowie auch in vertikaler Richtung.

Bei der Ausgestaltung nach Anspruch 5 wird das Gewicht der Achse hinsichtlich der Teile, die bei der Ausrichtung der Greifvorrichtung nicht bewegt werden, über Tragelemente abgetragen.

Dies erweist sich insofern als vorteilhaft, weil dadurch weiterhin das Gewicht reduziert wird, das von den ansteuerbaren Antriebsmitteln bei der Durchführung der Einstellarbeiten gehalten bzw. bewegt werden muss.

Anspruch 6 betrifft eine Vorrichtung zur Durchführung des Verfahrens zur Einstellung der Parameter der Fahrwerkgeometrie der Räder eines Fahrzeugs nach einem der vorhergehenden Ansprüche. Dabei weist die Vorrichtung eine Greifvorrichtung auf zum Greifen einer Achse mittels jeweils einer Greifvorrichtung im Bereich der Radflansche der jeweiligen Achse. Weiterhin weist die Vorrichtung ansteuerbare Antriebsmittel auf zum Antreiben der Greifvorrichtungen. Nach der vorliegenden Erfindung sind die Greifvorrichtungen bei gelösten Feststellmitteln für die Einstellung der Parameter der Fahrwerkgeometrie über die ansteuerbaren Antriebsmittel derart ausrichtbar, dass über die Ausrichtung der Greifvorrichtungen die Parameter der Fahrwerkgeometrie der Räder eingestellt werden.

Aus der EP 1 760 446 A2 ist es bekannt, die Räder eines Fahrzeugs mit Belastungseinheiten zu versehen. Dazu werden - beispielsweise elektromotorische - Antriebe an die Räder bzw. die Radflansche, die Radnaben oder daran angebrachte Adaptionsmittel angekoppelt. Es handelt sich bei diesem Stand der Technik um Prüfstände zur Durchführung von Funktionstest im Sinne von Fahrsimulationen sowie auch von Messungen und Einstellungen der Parameter der Fahrwerkgeometrie. Die Belastungseinheiten sind bei der EP 1 760 442 A1 an die Räder bzw. die Radaufnahmen eines Fahrzeugs gekoppelt zum Antreiben der Räder bzw. der Radflansche im Sinne einer Rotation um die jeweilige Radachse. Dieses Antreiben kann eine Beschleunigung sein oder auch das Aufbringen von Bremskräften. Damit können unterschiedliche Fahrbedingungen simuliert werden. Die Kombination dieses Prüfstandes zur Durchführung von Fahrsimulationen mit der Ausstattung mit den Belastungseinheiten mit einem Mess- und Einstellprüfstand für die Parameter der Fahrwerkgeometrie erfolgt bei der EP 1 760 442 A2, indem die Kopplung der Belastungseinheiten an die Räder bzw. die Radflansche derart erfolgt, dass diese Kopplung bei einer Änderung der Parameter der Fahrwerkgeometrie - und damit auch einer Änderung der Orientierung der Radachse - diesen Änderungen folgen kann. Bei der EP 1 760 446 A2 erfolgt somit in an sich bekannter Weise eine Einstellung der Parameter der Fahrwerkgeometrie. Dies gilt ebenso für die Durchführung der Messung der Parameter der Fahrwerkgeometrie. Die Kopplung der Belastungseinheiten und damit der ansteuerbaren Antriebsmittel der Greifvorrichtungen ist dabei derart ausgelegt, dass diese Kopplung den Änderungen der Orientierung der Radachse folgen kann, wenn die Einstellung der Parameter der Fahrwerkgeometrie über die Einstellmittel an der Achse des Fahrzeugs erfolgt. Bei diesem Stand der Technik sind die ansteuerbaren Antriebsmittel der Greifvorrichtungen nicht dazu ausgelegt, aktiv die Ausrichtung der Greifvorrichtungen vorzunehmen, um darüber die Parameter der Fahrwerkgeometrie einzustellen. Damit wird bei dem Gegenstand der EP 1 760 446 A2 die Kombination eines Fahrzeugfunktionsprüfstandes mit einem Fahrwerkgeometrieeinstellstand möglich.

Wie bereits im Zusammenhang mit Anspruch 1 erläutert, betrifft die Ausgestaltung der Vorrichtung nach der vorliegenden Erfindung die Möglichkeit, die Einstellung der Parameter der Fahrwerkgeometrie über die Ausrichtung der Greifvorrichtungen der Achse mittels der ansteuerbaren Antriebsmittel vorzunehmen. In konstruktiver Hinsicht ergibt sich dabei als Vorteil, dass es nicht notwendig ist, spezielle Einstellwerkzeuge angepasst an unterschiedliche Achsen vorzusehen. Es wird vielmehr möglich, die Greifvorrichtungen so auszugestalten, dass die Einstellarbeiten über die Greifvorrichtungen durchgeführt werden können. Die Greifvorrichtungen können dabei unterschiedliche Achsen aufnehmen, ohne dass es notwendig wäre, die Antriebe zur Einstellung der Parameter konstruktiv zu ändern.

Bei der Ausgestaltung nach Anspruch 7 sind die Greifvorrichtungen über die ansteuerbaren Antriebsmittel jeweils um zwei Achsen drehbar.

Damit wird es möglich, sowohl den Spurwinkel als auch den Sturzwinkel einzustellen. Die Ausgestaltung der ansteuerbaren Antriebsmittel als Drehantriebe ist in konstruktiver Hinsicht vergleichsweise einfach.

Wie bereits im Zusammenhang mit Anspruch 1 beschrieben, können die ansteuerbaren Antriebsmittel wechselseitig kräftefrei geschaltet werden, d.h. entkoppelt werden.

Bei der Ausgestaltung nach Anspruch 8 sind Lasttragelemente vorhanden, über die bei einer an ein Fahrzeug montierten Achse das Gewicht des Fahrzeugs abgetragen wird.

Dabei erweist es sich als vorteilhaft, dass das Gewicht des Fahrzeugs bei einer bereits an das Fahrzeug montierten Achse nicht über die ansteuerbaren Antriebselemente aufgenommen und - bei den Einstellarbeiten - mitbewegt werden muss. Es ist aber grundsätzlich auch möglich, die Einstellarbeiten an der Achse bereits dann vorzunehmen, wenn diese noch nicht an das Fahrzeug montiert ist.

Bei der Ausgestaltung nach Anspruch 9 sind die Antriebsmittel der Greifvorrichtungen derart beweglich gelagert, dass diese den Einstellbewegungen bei der Ausrichtung der Greifvorrichtungen folgen.

Wie bereits im Zusammenhang mit Anspruch 4 ausgeführt, bedeutet dies auch im Zusammenhang mit Anspruch 9, dass die ansteuerbaren Antriebsmittel so gelagert sind, dass diese zwar aktiv die Einstellung der jeweiligen Radebene bewirken, dabei aber gleichzeitig so gelagert sind, dass diese den dabei auftretenden Lageänderungen folgen können.

Die Einstellung des Sturzwinkels des Rades kann erfolgen, indem die Greifvorrichtung über einen Servoantrieb um eine erste Achse drehbar ist, die in der horizontalen Ebene liegt. Die Einstellung des Spurwinkels des Rades kann erfolgen, indem die Greifvorrichtung um eine Achse drehbar ist, die zumindest im Wesentlichen vertikal verläuft. Allerdings wird diese Achse durch die Einstellung eines "Sturzwinkels ungleich Null" aus der vertikalen Orientierung herausgedreht.

Bei der Ausgestaltung nach Anspruch 9 sind die ansteuerbaren Antriebsmittel so gelagert, dass sie diesen Bewegungen folgen können, dabei aber dennoch die entsprechenden Kräfte zur Einstellung auf die Greifvorrichtung aufbringen können.

Soweit - bedingt durch die Achsgeometrie - der Drehpunkt zur Einstellung der Radebene nicht im Zentrum der Ebene der Greifvorrichtung liegt, mit der diese die Achse greift, ist es weiterhin erforderlich, dass die ansteuerbaren Antriebsmittel in Fahrzeuglängsrichtung sowie in Fahrzeugquerrichtung verschiebbar sind sowie auch in vertikaler Richtung.

Bei der Ausgestaltung der Vorrichtung nach Anspruch 10 sind Tragelemente vorhanden, über die das Gewicht der Achse hinsichtlich der Teile, die bei der Ausrichtung der Greifvorrichtungen nicht bewegt werden, abgetragen wird.

Dies erweist sich insofern als vorteilhaft, weil dadurch weiterhin das Gewicht reduziert wird, das von den ansteuerbaren Antriebsmitteln bei der Durchführung der Einstellarbeiten gehalten bzw. bewegt werden muss.

Die ansteuerbaren Antriebsmittel nach der vorliegenden Erfindung können elektrisch, pneumatisch und/oder hydraulisch angetrieben sein.

Ein Ausführungsbeispiel der Erfindung ist in der Zeichnung dargestellt. Es zeigt dabei:
- Fig. 1:: eine Detaildarstellung einer Fahrzeugachse mit einer Greifvorrichtung,
- Fig. 2:: ein Ausführungsbeispiel für Tragelemente für ein Fahrzeug und
- Fig. 3:: ein Ausführungsbeispiel für Tragelemente für eine Achse.

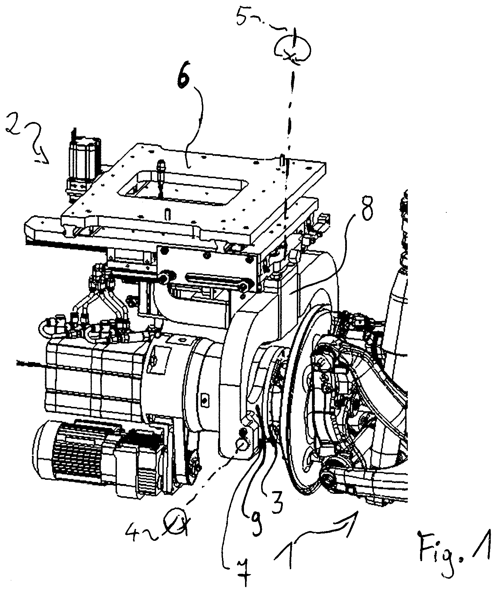

Figur 1 zeigt einen Teil einer Achse 1 eines Fahrzeugs. Es ist eine Greifvorrichtung 2 zu sehen. Diese ist in der Darstellung der Figur derart an einer Gegenlagerscheibe 3 der Achse 1 angebracht, dass über die Greifvorrichtung 2 die Parameter der Fahrwerkgeometrie eingestellt werden können.

Dazu weist die Greifvorrichtung 2 ein ansteuerbares Antriebsmittel 7 auf, durch das das Greifelement 9 der Greifvorrichtung 2 um die dargestellte Achse 4 drehbar ist. Durch diese Drehung wird der Sturzwinkel eingestellt. Die Achse 4 liegt dabei in der horizontalen Ebene.

Das Greifelement 9 ist mit der Gegenlagerscheibe 3 der Achse 1 verbunden.

Außerdem weist die Greifvorrichtung 2 ein weiteres ansteuerbares Antriebsmittel 8 auf, durch das die Greifvorrichtung 2 um die dargestellte Achse 5 drehbar ist. Diese Achse 5 ist dabei vertikal orientiert.

Die Greifvorrichtung 2 ist dabei so ausgelegt, dass sich die Achsen 4 und 5 in dem Punkt schneiden, um den die Radebene bei der Einstellung der Parameter der Fahrwerkgeometrie gedreht wird. Dadurch ist es vorteilhaft möglich, zur Durchführung der Einstellarbeiten die Ausrichtung der Greifvorrichtung 2 durch zwei Drehantriebe (7, 8) zu realisieren.

Es ist der Darstellung der Figur 1 zu entnehmen, dass die ansteuerbaren Antriebsmittel 8 zur Einstellung des Spurwinkels so ausgestaltet sind, dass eine Tragvorrichtung 6 im Sinne einer Einstellung des Spurwinkels gedreht wird. Die Tragvorrichtung 6 wird dabei gegenüber einem Träger um eine horizontale Achse gedreht. Die Tragvorrichtung 6 weist dabei eine Aufnahme auf für das ansteuerbare Antriebsmittel 7 zur Drehung um eine horizontale Achse. Über dieses ansteuerbare Antriebselement 7 wird das Greifelement 9, das unmittelbar an der Gegenlagerscheibe 3 der Achse 1 angreift, gegenüber der Tragvorrichtung 6 um die horizontale Achse 4 gedreht.

Der Spurwinkel wird bei dem dargestellten Ausführungsbeispiel eingestellt, indem die Orientierung der Tragvorrichtung 6 durch eine Drehung um die Achse 5 eingestellt wird. Der Sturzwinkel wird eingestellt, indem das Greifelement 9 gegenüber der Tragvorrichtung 6 um eine horizontale Achse 4 gedreht wird.

Durch diese Tragvorrichtung 6 wird realisiert, dass sich die beiden Achsen 4 und 5 immer in dem Punkt schneiden, um den bei den Einstellarbeiten die Radebene gedreht wird.

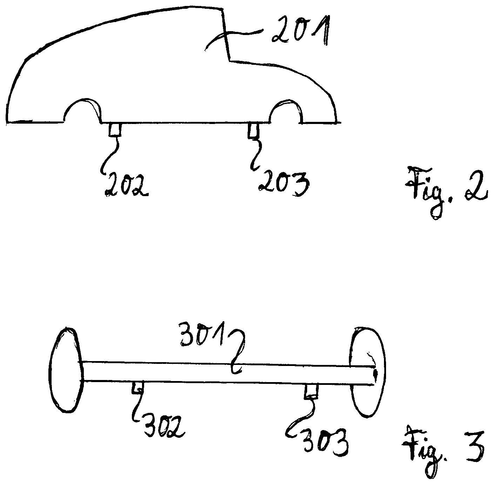

Figur 2 zeigt ein Ausführungsbeispiel für Tragelemente 202 und 203 für ein Fahrzeug 201. Über die Tragelemente 202 und 203 kann das Gewicht des Fahrzeugs abgetragen werden. Dies erweist sich bei einer montierten Achse als vorteilhaft, weil dann die ansteuerbaren Antriebsmittel dieses Fahrzeuggewicht nicht tragen und ggf. bewegen müssen. Die Tragelemente können im Bereich der Längsträger des Fahrzeugs 201 angeordnet sein, beispielsweise an den Punkten, an denen üblicherweise auch ein Wagenheber angesetzt wird.

Figur 3 zeigt eine Darstellung einer Fahrzeugachse 301. Es ist dargestellt, dass diese Fahrzeugachse 301 hinsichtlich der Teile, die bei der Einstellung der Parameter der Fahrwerkgeometrie nicht bewegt werden, abgestützt sein kann über Tragelemente 302, 303. Dadurch werden wiederum die ansteuerbaren Antriebsmittel bei der Durchführung der Einstellarbeiten entlastet.

## Patentansprüche

1. Verfahren zur Einstellung der Parameter der Fahrwerkgeometrie der Räder eines Fahrzeugs,
wobei zumindest eine Achse des Fahrzeugs gegriffen wird durch jeweils eine Greifvorrichtung (2) im Bereich der Radflansche der jeweiligen Achse,
**dadurch gekennzeichnet, dass** bei gelösten Feststellmitteln für die Einstellung der Parameter der Fahrwerkgeometrie die Greifvorrichtungen (2) über ansteuerbare Antriebsmittel (7, 8) derart bewegt werden (4, 5), dass über die Ausrichtung der Greifvorrichtungen (2) die Parameter der Fahrwerkgeometrie der Räder eingestellt werden.

2. Verfahren nach Anspruch 1,
**dadurch gekennzeichnet, dass** in einem ersten Schritt die Achse (1) in den Greifvorrichtungen (2) positioniert wird bei nicht angesteuerten Antriebsmitteln (7, 8), dass in einem weiteren Schritt die Feststellmittel der Achse (1) für die Parameter der Fahrwerkgeometrie aus deren arretierter Stellung gelöst werden, dass in einem dazu nachfolgenden Schritt über die ansteuerbaren Antriebsmittel (7, 8) die Greifvorrichtungen (2) entsprechend den Sollwerten der Parameter der Fahrwerkgeometrie ausgerichtet und in dieser Position arretiert werden, dass in einem dazu nachfolgenden Schritt die Feststellmittel der Achse (1) für die Parameter der Fahrwerkgeometrie wieder in die arretierte Stellung gebracht werden und dass in einem dazu nachfolgenden Schritt die Greifvorrichtungen (2) wieder gelöst werden.

3. Verfahren nach Anspruch 1 oder 2,
**dadurch gekennzeichnet, dass** bei einer an ein Fahrzeug (201) montierten Achse das Gewicht des Fahrzeugs (201) über Lasttragelemente (202, 203) abgetragen wird.

4. Verfahren nach einem der Ansprüche 1 bis 3,
**dadurch gekennzeichnet, dass** die Antriebsmittel (7, 8) der Greifvorrichtungen (2) derart beweglich sind, dass diese den Einstellbewegungen bei der Ausrichtung der Greifvorrichtungen (2) folgen.

5. Verfahren nach Anspruch 4,
**dadurch gekennzeichnet, dass** das Gewicht der Achse (301) hinsichtlich der Teile, die bei der Ausrichtung der Greifvorrichtungen (2) nicht bewegt werden, über Tragelemente (302, 303) abgetragen wird.

6. Vorrichtung zur Durchführung des Verfahrens zur Einstellung der Parameter der Fahrwerkgeometrie der Räder eines Fahrzeugs nach einem der vorhergehenden Ansprüche, wobei die Vorrichtung eine Greifvorrichtung aufweist zum Greifen einer Achse mittels jeweils einer Greifvorrichtung im Bereich der Radflansche der jeweiligen Achse, wobei die Vorrichtung weiterhin ansteuerbare Antriebsmittel aufweist zum Antreiben der Greifvorrichtung,
**dadurch gekennzeichnet, dass** bei gelösten Feststellmitteln für die Einstellung der Parameter der Fahrwerkgeometrie die Greifvorrichtungen (2) über die ansteuerbaren Antriebsmittel (7, 8) derart ausrichtbar sind, dass über die Ausrichtung der Greifvorrichtungen (2) die Parameter der Fahrwerkgeometrie der Räder eingestellt werden.

7. Vorrichtung nach Anspruch 6,
**dadurch gekennzeichnet, dass** die Greifvorrichtungen (2) über die ansteuerbaren Antriebsmittel (7, 8) jeweils um zwei Achsen (4, 5) drehbar sind.

8. Vorrichtung nach Anspruch 6 oder 7,
**dadurch gekennzeichnet, dass** Lasttragelemente (202, 203) vorhanden sind, über die bei einer an ein Fahrzeug (201) montierten Achse das Gewicht des Fahrzeugs (201) abgetragen wird.

9. Vorrichtung nach einem der Ansprüche 6 bis 8,
**dadurch gekennzeichnet, dass** die Antriebsmittel (7, 8) der Greifvorrichtungen (2) derart beweglich gelagert sind, dass diese den Einstellbewegungen bei der Ausrichtung der Greifvorrichtungen (2) folgen.

10. Vorrichtung nach Anspruch 9,
**dadurch gekennzeichnet, dass** Tragelemente (302, 303) vorhanden sind, über die das Gewicht der Achse (301) hinsichtlich der Teile, die bei der Ausrichtung der Greifvorrichtungen (2) nicht bewegt werden, abgetragen wird.

## Claims

1. Method for adjusting the wheel alignment parameters of the wheels of a vehicle,
at least one vehicle axle being gripped by one gripping device (2) per wheel axle, near the wheel flanges of the axle in question,
**characterised in that,** when the securing means have been released to allow adjustment of the wheel alignment parameters, the gripping devices (2) are moved via controllable drive means (7, 8) in such a way (4, 5) that the wheel alignment parameters of the wheels are adjusted via the orientation of the gripping devices (2).

2. Method according to claim 1,
**characterised in that,** in a first step, the axle (1) is positioned in the gripping devices (2) while the drive means (7, 8) are not activated, that in a further step, the axle's (1) securing means for the wheel alignment parameters are released from their locked position, **that** in the next step, the gripping devices (2) are adjusted, via the controllable drive means (7, 8), according to the specified values of the wheel alignment parameters and are locked in this position, **that** in a consecutive step the axle's (1) securing means for the wheel alignment parameters are locked in position again **and that** the gripping devices (2) are then released again in the following step.

3. Method according to either of claims 1 or 2,
**characterised in that,** in the case of an axle fitted in a vehicle (201), the weight of the vehicle (201) is supported by load-bearing elements (202, 203).

4. Method according to any one of the claims 1 to 3,
**characterised in that** the drive means (7, 8) for the gripping devices (2) are able to move in such a way as to allow them to follow the adjustment movements during orientation of the gripping devices (2).

5. Method according to claim 4,
**characterised in that** the weight of those parts of the axle (301) that are not moved during orientation of the gripping devices (2) is supported by load-bearing elements (302, 303).

6. Device for carrying out the method, as set forth in any one of the preceding claims, of adjusting the wheel alignment parameters of the wheels of a vehicle, the device having a gripping device for gripping an axle by means of one gripping device per axle, near the wheel flanges of the axle in question,
**characterised in that,** when the securing means have been released to allow adjustment of the wheel alignment parameters, the gripping devices (2) can be moved via controllable drive means (7, 8) in such a way that the wheel alignment parameters of the wheels are adjusted via the orientation of the gripping devices (2).

7. The device of claim 6,
**characterised in that** each of the gripping devices (2) can be rotated about two axes (4, 5) via the controllable drive means (7, 8).

8. Method according to either of claims 6 or 7,
**characterised in that** load-bearing elements (202, 203) are provided which, in the case of an axle fitted in a vehicle (201), support the weight of the vehicle (201).

9. Device according to any one of the claims 6 to 8,
**characterised in that** the drive means (7, 8) for the gripping devices (2) are movably supported in such a way as to allow them to follow the adjustment movements during orientation of the gripping devices (2).

10. The device of claim 9,
**characterised in that** load-bearing elements (302, 303) are provided, which support the weight of those parts of the axle (301) that are not moved during orientation of the gripping devices (2).

## Revendications

1. Procédé de réglage des paramètres de la géométrie de châssis des roues d'un véhicule,
dans lesquels au moins un essieu du véhicule est saisi par un dispositif de préhension (2) dans la région de chaque flasque de roue de l'essieu considéré,
**caractérisé en ce que** les dispositifs de préhension (2) sont manoeuvrés (4, 5) à l'aide de moyens d'entraînement (7, 8) pouvant être commandés alors que les moyens de blocage pour le réglage des paramètres de la géométrie de châssis sont libérés, de telle sorte que les paramètres de la géométrie de châssis des roues sont réglés par l'orientation des dispositifs de préhension (2).

2. Procédé selon la revendication 1,
**caractérisé en ce que,** dans une première étape, l'essieu (1) est positionné dans les dispositifs de préhension (2) avec les moyens d'entraînement (7, 8) qui ne sont pas actionnés, **en ce que** dans une autre étape, les moyens de blocage de l'essieu (1) pour les paramètres de la géométrie de châssis sont libérés de leur position verrouillée, **en ce que** dans une étape suivante, les dispositifs de préhension (2) sont orientés par le biais des moyens d'entraînement pouvant être commandés (7, 8) conformément aux valeurs de consigne des paramètres de la géométrie du châssis et ils sont verrouillés dans cette position, **en ce que** dans une étape suivante, les moyens de blocage de l'essieu (1) pour les paramètres de la géométrie du châssis sont ramenés en position verrouillée, et **en ce que** dans une étape suivante, les dispositifs de préhension (2) sont à nouveau libérés.

3. Procédé selon la revendication 1 ou 2,
**caractérisé en ce que** dans le cas d'un essieu monté sur un véhicule (201), le poids du véhicule (201) est supporté par l'intermédiaire d'éléments porte-charge (202, 203).

4. Procédé selon l'une des revendications 1 à 3,
**caractérisé en ce que** les moyens d'entraînement (7, 8) des dispositifs de préhension (2) sont mobiles de telle sorte qu'ils suivent les mouvements de réglage lors de l'orientation des dispositifs de préhension (2).

5. Procédé selon la revendication 4,
**caractérisé en ce que** le poids de l'essieu (301), en ce qui concerne les parties qui ne sont pas déplacées lors de l'orientation des dispositifs de préhension (2), est supporté par l'intermédiaire d'éléments de support (302, 303).

6. Dispositif pour la mise en oeuvre du procédé de réglage des paramètres de la géométrie de châssis des roues d'un véhicule selon l'une des revendications précédentes, le dispositif étant muni d'un dispositif de préhension pour saisir un essieu au moyen d'un dispositif de préhension dans la région de chaque flasque de roue de l'essieu considéré, le dispositif étant muni en outre de moyens d'entraînement pouvant être commandés pour entraîner le dispositif de préhension,
**caractérisé en ce que,** alors que les moyens de blocage pour le réglage des paramètres de la géométrie de châssis sont libérés, les dispositifs de préhension (2) peuvent être orientés par le biais des moyens d'entraînement pouvant être commandés (7, 8) de telle sorte que les paramètres de la géométrie de châssis des roues sont réglés par l'orientation des dispositifs de préhension (2).

7. Dispositif selon la revendication 6,
**caractérisé en ce que** les dispositifs de préhension (2) peuvent être tournés chacun autour de deux axes (4, 5) par les moyens d'entraînement pouvant être commandés (7, 8).

8. Dispositif selon la revendication 6 ou 7,
**caractérisé en ce que** dans le cas d'un essieu monté sur un véhicule (201), des éléments porte-charge (202, 203) sont prévus par l'intermédiaire desquels le poids du véhicule (201) est supporté.

9. Dispositif selon l'une des revendications 6 à 8,
**caractérisé en ce que** les moyens d'entraînement (7, 8) des dispositifs de préhension (2) sont montés mobile de telle sorte qu'ils suivent les mouvements de réglage lors de l'orientation des dispositifs de préhension (2).

10. Dispositif selon la revendication 9,
**caractérisé en ce que** des éléments de support (302, 303) sont prévus par l'intermédiaire desquels le poids de l'essieu (301) est supporté en ce qui concerne les parties qui ne sont pas déplacées lors de l'orientation des dispositifs de préhension (2) par rapport aux pièces.
